(19) **Europäisches Patentamt**
**European Patent Office**
**Office européen des brevets**

(11) **EP 1 815 899 B1**

(12) **EUROPEAN PATENT SPECIFICATION**

(45) Date of publication and mention
of the grant of the patent:
**20.07.2011 Bulletin 2011/29**

(51) Int Cl.:
**B01D 11/00** (2006.01)　　**A24B 15/24** (2006.01)
**A23F 5/24** (2006.01)　　**B01D 15/40** (2006.01)

(21) Application number: **05790337.9**

(22) Date of filing: **06.10.2005**

(86) International application number:
**PCT/JP2005/018564**

(87) International publication number:
**WO 2006/046392 (04.05.2006 Gazette 2006/18)**

(54) **METHOD FOR EXTRACTING COMPONENT FROM MATERIAL TO BE PROCESSED AND APPARATUS USED IN THE METHOD**

VERFAHREN ZUR EXTRAKTION EINER KOMPONENTE AUS EINEM ZU VERARBEITENDEN MATERIAL UND DABEI VERWENDETE VORRICHTUNG

PROCÉDÉ D'EXTRACTION D UN COMPOSANT DU MATÉRIAU À TRAITER ET APPAREIL UTILISÉ DANS LE PROCÉDÉ

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.10.2004 JP 2004313989**

(43) Date of publication of application:
**08.08.2007 Bulletin 2007/32**

(73) Proprietor: **Japan Tobacco, Inc.**
**Tokyo 105-8422 (JP)**

(72) Inventors:
• **HARUKI, Masashi,**
**c/o JAPAN TOBACCO INC.**
**Yokohama-shi, Kanagawa 227-0052 (JP)**

• **UEMATSU, Hiromi c/o JAPAN TOBACCO INC.,**
**2270052 (JP)**
• **NAKANISHI, Yukio c/o JAPAN TOBACCO INC.,**
**2270052 (JP)**

(74) Representative: **Sandmann, Wolfgang et al**
**Reinhard, Skuhra, Weise & Partner GbR**
**Patent- und Rechtsanwälte**
**Friedrichstrasse 31**
**80801 München (DE)**

(56) References cited:
WO-A1-00/15331　　WO-A1-01/65954
JP-A- 1 196 285　　JP-A- 4 281 801
JP-A- 6 098 746　　JP-A- 8 019 389
JP-A- 8 023 952　　JP-A- 63 229 102
LU-A1- 82 835　　US-A- 4 153 063

EP 1 815 899 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Technical Field

The present invention relates to an extraction method for extracting and removing a predetermined component from material and a device used for the method.

### Background Art

As an extraction method of this type, for example, US Patent No. 4,153,063 discloses a method of extracting nicotine from tobacco. This extraction method includes the first step of extracting aroma components from tobacco, the second step of extracting nicotine, and the third step of adding back to the tobacco the aroma components extracted in the first step. Through these steps, under the given conditions, a high-pressure solvent is supplied into an extraction container filled with tobacco; the aroma components and the nicotine are removed from the tobacco by the solvent brought into contact with the tobacco; and the aroma components are added back to the tobacco.

Unexamined Japanese Patent Application Publication No. H01-196285 discloses a method and device for extracting nicotine from tobacco semi-continuously. This device has a plurality of extraction containers that are serially arranged in a channel for solvent. Bypass channels for bypassing their respective extraction containers are connected to the channel for solvent. In the extraction method using this device, the solvent that has passed through an upstream extraction container, as viewed in the flowing direction of the solvent, and has extracted nicotine, that is, the solvent that has been increased in its nicotine concentration, passes through a downstream extraction container as well. At this point, the solvent can extract nicotine from the tobacco again. According to this extraction method, the solvent is used for extraction until its nicotine concentration is saturated while passing through a series of extraction containers. It seems that this reduces the time required to extract nicotine from the entire tobacco and enables quick extraction.

In these well-known extraction methods, however, the concentration of extracted components in the solvent is gradually increased as the solvent flows through the extraction containers. For this reason, the material, which is located downstream in an extraction container, is hard to be extracted, as compared to that located upstream, even though they are contained in the same extraction container. Therefore, the reduction rate of the extracted components becomes irregular, depending upon the location of the material. This generates fluctuations in quality.

The irregularity of the reduction rate in the same extraction container decreases if extraction time is sufficiently extended. If do so, however, quick extraction is difficult. The irregularity of the reduction rate can be similarly lessened by enhancing the flow velocity of the solvent and increasing the amount of the solvent that is brought into contact with the processing material. However, there is a limit to the dischargeability of a pump, and also to the enhancement of the flow velocity of the solvent.

Japanese Translation of PCT International Application No. 2003-526345 discloses a method of extracting nicotine and TSNA (tobacco-specific nitrosamine) from tobacco. This extraction method is the same as the above-mentioned extraction method in that a high-pressure solvent is supplied into extraction containers. According to the document, the reduction rate of nitrosamine can be selectively made higher than that of nicotine by adjusting extraction time.

The irregularity of the reduction rate is more noticeable in an early stage of extraction where the amount of extraction from the upstream material is large. Therefore, if the extraction time is shortened as described in the document in order to increase the reduction rate of TSNA to be higher than that of nicotine, the irregularity of the reduction rate of nicotine and TSNA grows bigger. As a consequence, fluctuations in quality are increased.

Document JP404281801 teaches a solution to the problem of non-homogeneous extraction.

### Disclosure of the Invention

It is an object of the present invention to provide a method of extracting a component from material, the method enabling quick and steady extraction and being suitable for selective extraction of a predetermined component, and a device used for the method.

In order to achieve the object, a method of extracting a component from material according to the present invention includes the steps of alternately arranging the material and adsorbent in layers along an inner channel of a container, supplying a high-pressure solvent into the inner channel of the container, extracting a predetermined component from the material into the solvent, and adsorbing the predetermined component in the solvent into the adsorbent to remove the component. More specifically, the material may be tobacco. In this case, nicotine and tobacco-specific nitrosamine are removed each as the predetermined component. The adsorbent may contain one substance that is selected from the group consisting of activated carbon, a synthetic adsorbent, zeolite, ion exchange resin, alumina, and silica gel.

With the component extraction method according to the present invention, since the material and the adsorbent are alternately arranged in layers, the extracted components that are extracted from the material layers are removed from the solvent in the adsorbent layers located immediately downstream of the respective material layers. The material layers are then supplied with the solvent containing no extracted components, so that there is no difference occurring in reduction rates of the extracted components between the material layers. On this account, this component extraction method enables quick and steady extraction and makes uniform the quality of the processed material.

In a preferred aspect, carbon dioxide having a temperature of 10 $^\circ$C to 80 $^\circ$C and a pressure of 3 MPa to 40 MPa is supplied as the high-pressure solvent. In the present aspect, the material is prevented from being degraded in quality due to the extraction.

In a preferred aspect, the component extraction method further includes a preprocessing step of previously finding relationship between a time period for supplying the solvent and a reduction rate of the predetermined component in the material in each of the layers, and determining a solvent supply time period required for a representative reduction rate of the predetermined component of the entire material to reach a desired value. Upon elapse of the solvent supply time period that is determined in the preprocessing step, the supply of the solvent is stopped. In the present aspect, even if the solvent supply time that is determined in the preprocessing step is short so that the predetermined component may be selectively extracted from the material at a predetermined reduction rate, there generates no difference in the reduction rates of the extracted components between the material layers regardless of size of the container. To be brief, this component extraction method enables the selective and steady extraction of the predetermined component from a large quantity of the material.

In a preferred aspect, the solvent is circulated. In the present aspect, a component that is not removed in the adsorbent layers is suppressed from being extracted as the concentration of the component in the solvent reaches partition equilibrium concentration. Depending upon a selected adsorbent, a component required in the material is suppressed from being extracted.

In order to accomplish the above-mentioned object, a device for extracting a component from material according to the present invention has a container including an inner channel, material zones filled with the material and adsorbent zones filled with adsorbent, which are alternately arranged in layers in the inner channel of the container, and a circulation channel for solvent, which is partially formed of the inner channel of the container. A predetermined component contained in the material is extracted into the solvent, and the predetermined component in the solvent is adsorbed into the adsorbent to be removed.

With the component extraction device of the present invention, since the material and the adsorbent are alternately arranged in layers in the material and adsorbent zones of the container, the extracted components that are extracted from the material layers are removed from the solvent in the adsorbent layers located immediately downstream of the respective material layers. Consequently, the material layers are supplied with the solvent containing no extracted components, so that there generates no difference in reduction rates of the extracted components between the material layers. Accordingly, this component extraction device enables quick and steady extraction and makes uniform the quality of the processed material.

**Brief Description of the Drawings**

FIG. 1 is a schematic configuration view of a device for extracting a component from material according to one embodiment of the present invention;

FIG. 2 is a graph showing a result of extraction using the device of FIG. 1 under the conditions of a solvent temperature of 70 °C, a solvent pressure of 25 MPa, and an extraction time of 35 minutes;

FIG. 3 is a graph showing a result of extraction using the device of FIG. 1 under the conditions of a solvent temperature of 35 °C, a solvent pressure of 10 MPa, and an extraction time of 35 minutes;

FIG. 4 is a graph showing a result of extraction using the device of FIG. 1 under the conditions of a solvent temperature of 70 °C, a solvent pressure of 25 MPa, and an extraction time of 17 minutes;

FIG. 5 is a graph showing a result of extraction using a conventional method of extracting a component under the conditions of a solvent temperature of 70 °C, a solvent pressure of 25 MPa, and an extraction time of 35 minutes;

FIG. 6 is a schematic configuration view of a conventional device for extracting a component;

FIG. 7 is a graph showing a result of extraction using a conventional method of extracting a component under the conditions of a solvent temperature of 35 °C, a solvent pressure of 10 MPa, and an extraction time of 105 minutes;

FIG. 8 is a schematic configuration view showing a modification example of the device of FIG. 1; and

FIG. 9 is a schematic configuration view showing an extraction container of a modification example which is applied to the device of FIG. 1.

**Best Mode of Carrying out the Invention**

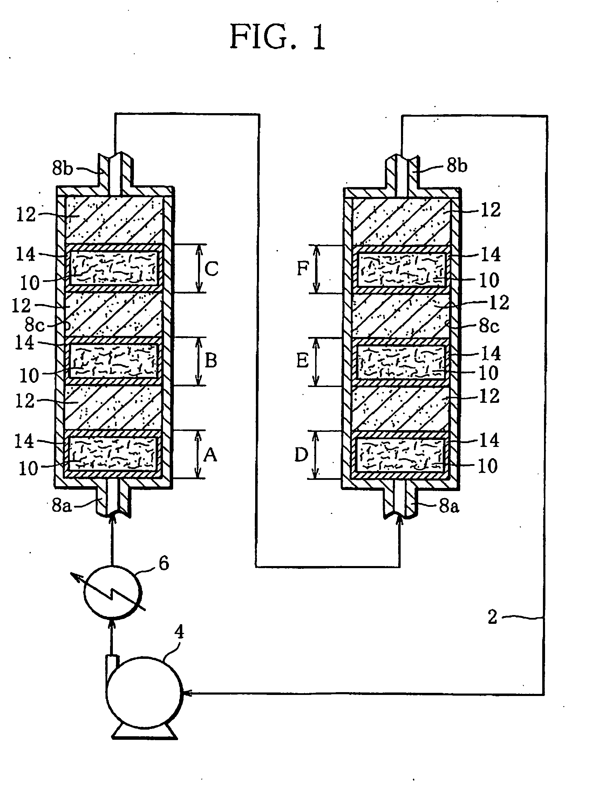

FIG. 1 shows a device for extracting a component from material according to one embodiment of present invention.

The extraction device has a circulation channel 2 through which a high-pressure liquid or $CO_2$ (carbon dioxide) that is a supercritical fluid is circulated as solvent. A circulation pump 4 is interposed in the circulation channel 2. The circulation pump 4 produces a flux of the solvent in the circulation channel 2. In so doing, the circulation pump 4 raises the pressure of the solvent sucked in from an inlet of the circulation pump 4, and discharges the solvent that falls within a predetermined pressure range from an outlet thereof. A heat exchanger 6 is set downstream from the circulation pump 4 in the circulation channel 2. The heat exchanger 6 heats the solvent inside, and releases the solvent that falls within a predetermined temperature range.

Two pressure-resistant extraction containers 8, 8 are serially arranged downstream from the heat exchanger 6 in the circulation channel 2. Each of the extraction containers 8 is formed into a shape of a cylinder that is long in an axial direction, and has an inlet port 8a and an outlet port 8b in a lower end wall and an upper end wall, respectively. In between the inlet port 8a and the outlet port 8b, an inner channel 8c, for example, having an internal diameter of 185 mm and a length of 675 mm is partitioned off by the lower end wall, the upper end wall and an inner circumferential wall. Each of the inner channels 8c forms a part of the circulation channel 2 through the corresponding inlet port 8a and outlet port 8b. The upper end wall is removable as an upper lid of the extraction container 8.

In the extraction container 8, tobacco shreds 10 weighing 1.8 Kg in total and grained activated carbon 12 weighing 3 Kg in total are alternately arranged in layers along the inner channel 8c as material to be processed and adsorbent, respectively. Concretely, the shreds 10 contain 22 percent water in dry base, and are divided into individual 300 g portions wrapped in respective cylindrical baskets 14 made of nonwoven cloth through which the solvent cannot pass. The shreds 10 in each of the baskets 14 form a single material layer. In the inner channel 8c of each of the extraction containers 8, three material layers and three adsorbent layers are disposed. One of the material layers is located closest to the inlet port 8a in the inner channel 8c. The activated carbon 12 is divided into individual 500 g portions that are directly disposed on the respective baskets 14, thereby forming the adsorbent layers.

According to an extraction method carried out using the above-described extraction device, the shreds 10 are processed by batch operation using a solvent circulation method. To be more specific, after the shreds 10 wrapped in the baskets 14 and the activated carbon 12 are alternately filled in the inner channel 8c of each of the extraction containers 8, the circulation pump 4 and the heat exchanger 6 are activated. The solvent ($CO_2$), for example, having a temperature of 70 °C and a pressure of 25 MPa then starts to circulate through the circulation channel 2. After passing through the heat exchanger 6, the circulated solvent flows into the upstream extraction container 8 from the inlet port 8a. The solvent then passes through the processing material layers and the adsorbent layers alternately, and flows out from the outlet port 8b. The solvent released from the upstream extraction container 8 flows into the downstream extraction container 8 from the inlet port 8a. After passing through the material layers and the adsorbent layers alternately, the solvent flows out from the outlet port 8b, and is sucked into the circulation pump 4. The circulation pump 4 and the heat exchanger 6 are stopped after elapse of, for example, 35 minutes after activation. Subsequently, the shreds 10 are removed from the extraction containers 8 and sent to cigarette production.

According to the extraction method, while flowing through the inner channels 8c of the extraction containers 8, the solvent contacts the shreds 10 when passing through the processing material layers, and extracts nicotine and TSNA (tobacco-specific nitrosamine) from the shreds 10. Therefore, the solvent that has passed through the material layers contains nicotine and TSNA of high concentration. However, when passing through the adsorbent layers located immediately downstream of the respective material layers, the solvent contact the activated carbon 12, so that the nicotine and TSNA contained in the solvent are adsorbed by the activated carbon 12. Accordingly, the solvent that contains little nicotine and TSNA and is recovered in solvent power with respect to nicotine and TSNA is supplied to the material layers located immediately downstream of the respective adsorbent layers. As a result, amounts of the nicotine and the TSNA extracted from the material layers are constantly kept at maximum. Consequently, the extraction method makes it possible to remove the nicotine and the TSNA from the shreds 10 of a predetermined amount in a short time.

TSNA is a generic term for nitrosamine (secondary alkanoid) produced through a process in which nicotine (primary alkanoid) or demethylated nicotine is nitrosated. To be more precise, TSNA contains N'-nitrosonornicotine, 4-metylnitrosamino-1-(3-pyridyl)-1-butanone, N'-nitrosoanatabine, N'-nitrosoanabasine, etc. Aside from nicotine and TSNA, a fat-soluble component such as solanesol, PAH (polycyclic aromatic hydrocarbon) such as benzopyrene, and protein are also extracted from tobacco.

According to the extraction method, the solvent containing nicotine and TSNA of the same concentration is supplied to all the material layers, to thereby equalize the amounts of the nicotine and the TSNA extracted from the material layers. This prevents irregularity in reduction rates of the nicotine and TSNA in all the shreds 10, and makes uniform the quality of the shreds 10.

It is preferable that the $CO_2$ acting as solvent be within a temperature range from 10 to 80 °C and a pressure range from 3 to 40 MPa when being supplied into the extraction containers 8 in order not only to efficiently extract the nicotine and the TSNA from the shreds 10 but also to prevent the shreds 10 from being degraded in quality due to the extraction. It is further preferable that the $CO_2$ be a supercritical fluid that is at or above a critical point, or at a temperature of 31°C or more and a pressure of 7.4 MPa or more. In this case, because the supercritical fluid is considerably changed in density and solubility by slight changes of temperature and pressure, the components to be extracted can be efficiently extracted by adjusting the temperature and the pressure.

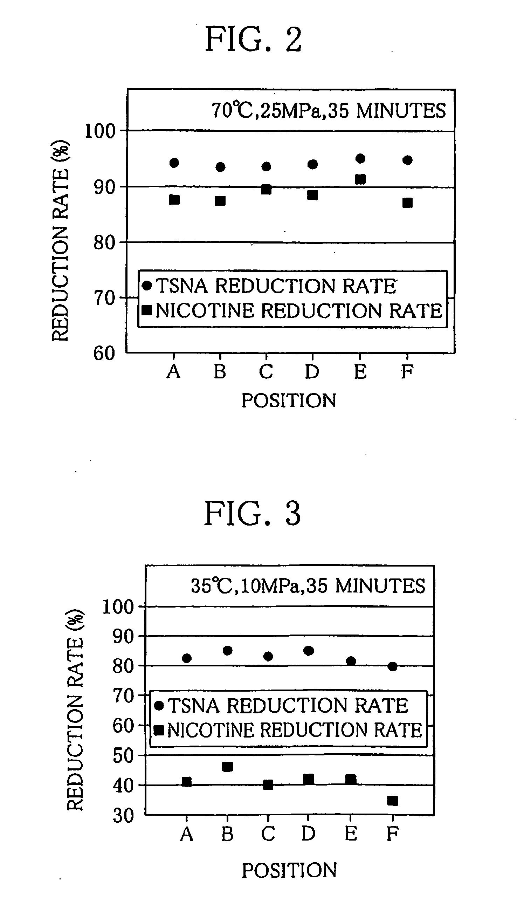

TABLE 1 and FIG. 2 show as Embodiment 1 the reduction rates of nicotine and TSNA at the time point when the shreds 10 are subjected to the extraction by the above-mentioned extraction method. The reduction rates of nicotine and TSNA here mean proportions of difference between amounts of the nicotine and TSNA contained in the shreds 10 before extraction and those immediately after the extraction. The reduction rates are expressed by the following expression.

$$\text{Reduction rate [\%]} = \{(\text{contained amount before extraction} - \text{contained amount after extraction})/\text{contained amount before extraction}\} \times 100$$

Positions A to F indicate positions of the material layers, as viewed in a flowing direction of the solvent.

[TABLE 1]

Embodiment 1: Solvent:$CO_2$, Solvent temperature: 70°C, Solvent pressure:25 MPa, Extraction time:35 minutes

| | Position | | | | | | Average | STD |
|---|---|---|---|---|---|---|---|---|
| | A | B | C | D | E | F | | |
| TSNA Reduction Rate (%) | 94.2 | 93.5 | 93.6 | 94.1 | 95.1 | 94.9 | 94.2 | 0.66 |
| Nicotine Reduction Rate (%) | 87.7 | 87.5 | 89.5 | 88.7 | 91.3 | 87.2 | 88.6 | 1.55 |

TABLE 2 and FIG. 3 show as Embodiment 2 a result of extraction using the extraction device under the conditions of a solvent temperature of 35 °C, a solvent pressure of 10 MPa, and an extraction time of 35 minutes.

[TABLE 2]

Embodiment 2: Solvent:$CO_2$, Solvent temperature:35°C, Solvent pressure:10 MPa, Extraction time:35 minutes

| | Position | | | | | | Average | STD |
|---|---|---|---|---|---|---|---|---|
| | A | B | C | D | E | F | | |
| TSNA Reduction Rate (%) | 82.5 | 85.1 | 83.2 | 84.6 | 81.5 | 79.6 | 82.8 | 2.03 |
| Nicotine Reduction Rate (%) | 40.8 | 45.5 | 39.6 | 41.8 | 41.1 | 34.3 | 40.5 | 3.64 |

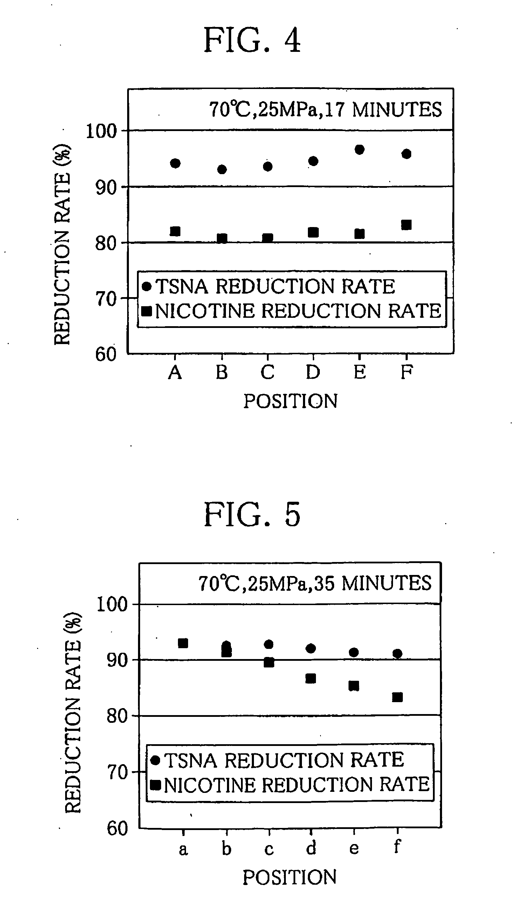

TABLE 3 and FIG. 4 show as Embodiment 3 a result of extraction using the extraction device under the conditions of a solvent temperature of 70 °C, a solvent pressure of 25 MPa, and an extraction time of 17 minutes.

[TABLE 3]

Embodiment 3: Solvent temperature:70°C, Solvent pressure:25 MPa, Extraction time:17 minutes

| | Position | | | | | | Average | STD |
|---|---|---|---|---|---|---|---|---|
| | A | B | C | D | E | F | | |
| TSNA Reduction Rate (%) | 94.1 | 93.0 | 93.5 | 94.6 | 96.6 | 95.9 | 94.6 | 1.39 |

(continued)

| Embodiment 3: Solvent temperature:70°C, Solvent pressure:25 MPa, Extraction time:17 minutes | | | | | | | | |
|---|---|---|---|---|---|---|---|---|
| | Position | | | | | | Average | STD |
| | A | B | C | D | E | F | | |
| Nicotine Reduction Rate (%) | 81.9 | 80.7 | 80.5 | 81.9 | 81.6 | 83.3 | 81.7 | 1.01 |

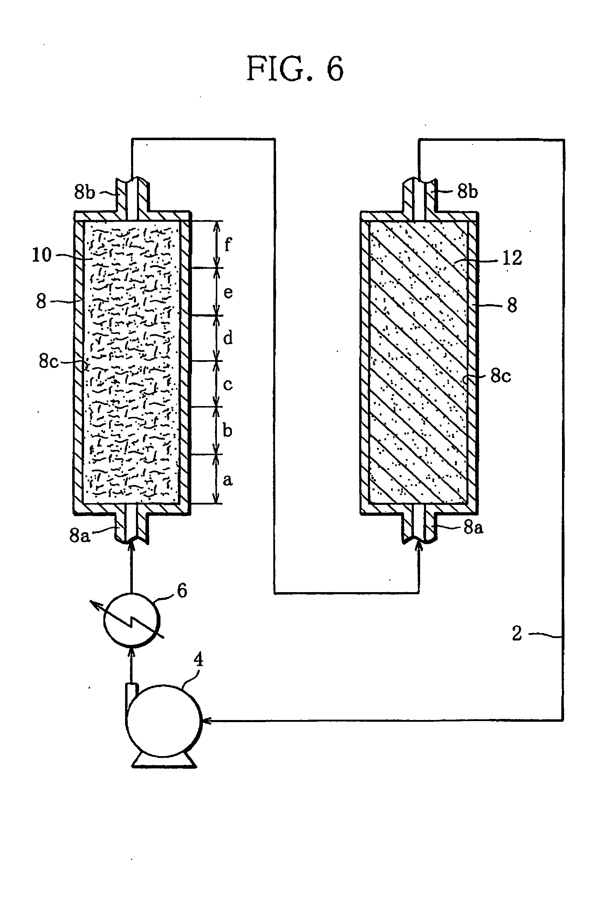

As Comparative Example 1, TABLE 4 and FIG. 5 show a result of extraction carried out under the conditions of a solvent temperature 70 °C, a solvent pressure of 25 MPa, and an extraction time of 35 minutes in a state where the upstream extraction container 8 is filled only with the shreds 10, and the downstream extraction container 8 only with the activated carbon 12, as illustrated in FIG. 6. Positions a to f indicate positions of the material, as viewed in the flowing direction of the solvent, as illustrated in FIG. 6.

[TABLE 4]

| Comparative Example 1: Solvent:$CO_2$, Solvent temperature:70°C, Solvent pressure:25 MPa, Extraction time:35 minutes | | | | | | | | |
|---|---|---|---|---|---|---|---|---|
| | Position | | | | | | Average | STD |
| | a | b | c | d | e | f | | |
| TSNA Reduction Rate (%) | 93.0 | 92.4 | 92.7 | 92.1 | 91.3 | 91.1 | 92.1 | 0.76 |
| Nicotine Reduction Rate (%) | 93.0 | 91.4 | 89.5 | 86.7 | 85.3 | 83.2 | 88.2 | 3.76 |

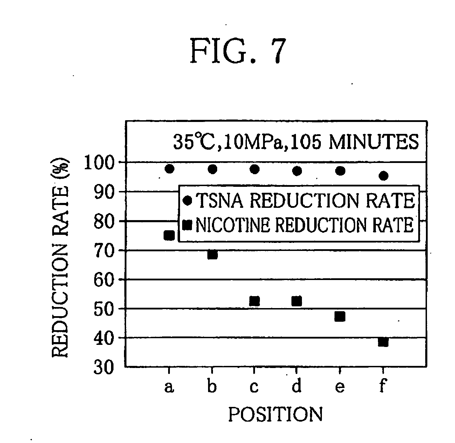

TABLE 5 and FIG. 7 show as Comparative Example 2 a result of extraction using the device of FIG. 6 under the conditions of a solvent temperature of 35 °C, a solvent pressure 10 MPa, and an extraction time of 105 minutes.

[TABLE 5]

| Comparative Example 2: Solvent:$CO_2$, Solvent temperature:35°C, Solvent pressure:10 MPa, Extraction time:105 minutes | | | | | | | | |
|---|---|---|---|---|---|---|---|---|
| | Position | | | | | | Average | STD |
| | a | b | c | d | e | f | | |
| TSNA Reduction Rate (%) | 97.7 | 97.6 | 97.6 | 97.1 | 97.0 | 95.3 | 97.1 | 0.90 |
| Nicotine Reduction Rate (%) | 74.9 | 68.6 | 52.4 | 52.6 | 47.1 | 38.3 | 55.7 | 13.7 |

TABLES 1 to 5 and FIGS. 2 to 5 and 7 show the following matters.

(1) In comparison between Embodiment 1 and Comparative Example 1, Embodiment 1 in which the shreds 10 and the activated carbon 12 are alternately arranged in layers is smaller than Comparative Example 1 in terms of fluctuations (STD) in the reduction rates of nicotine and TSNA. The result shows that the component extraction method and device of Embodiment 1 prevent irregularity of extraction from being generated.

(2) In comparison between Comparative Example 1 and Comparative Example 2, Comparative Example 2 in which the solvent temperature and pressure are low, and extraction conditions are moderate, is larger than Comparative Example 1 in terms of fluctuations in the reduction rate of nicotine in spite that the extraction time of Comparative Example 2 is three times as long as that of Comparative Example 1.

This is considered because solubilities of nicotine and TSNA with respect to solvent are low when extraction conditions are moderate, and the nicotine contained in tobacco more than the TSNA is mainly extracted from the shreds 10 located in the upstream positions a and b, whereas the shreds 10 located in the downstream positions c, d and e is supplied with the solvent whose nicotine concentration is almost saturated.

(3) In comparison between Embodiment 2 and Comparative Example 2 in which the respective extraction conditions are moderate, Embodiment 2 is smaller than Comparative Example 2 in terms of fluctuations in the reduction rate of nicotine in spite that the extraction time of Embodiment 2 is one third of that of Comparative Example 2. This is considered because even if the extraction conditions are moderate, and the nicotine has low solubility with respect to the solvent, the solvent from which nicotine is removed in the absorbent layers is supplied to the material layers, and the nicotine is extracted equally from the material layers. This result shows that the component extraction method and device of Embodiment 2 can prevent irregularity of extraction even if the extraction is performed under moderate conditions to avoid degradation in quality of the material. In addition, the reason that Comparative Example 2 is smaller than Embodiment 2 in terms of fluctuations in the reduction rate of TSNA is considered because the extraction time of Comparative Example 2 is longer.

(4) In comparison between Embodiments 1 and 3, Embodiment 3 in which the extraction time is short is smaller than Embodiment 1 in terms of the reduction rate of nicotine. The reduction rates of TSNA in Embodiments 1 and 3 are virtually equal to each other. This result shows that, if relationship between the extraction time and the reduction rates of nicotine and TSNA in the material layers is found, and such extraction time that the representative reduction rates of the nicotine and TSNA, for example, average values of the reduction rates in the material layers become a desired value is predetermined, it is possible to selectively increase the reduction rate of TSNA with respect to that of nicotine while the irregularity of extraction is prevented by adjusting the extraction time.

(5) In comparison between Embodiments 1 and 2, Embodiment 2 in which the extraction conditions are moderate is smaller than Embodiment 1 in terms of the reduction rates of nicotine and TSNA. This result shows that it is possible to increase the reduction rates of nicotine and TSNA while preventing the irregularity of extraction by adjusting the solvent temperature and pressure.

The present invention is not limited to the above-described one embodiment, and may be modified in various ways. For instance, the present invention is applicable to the whole gamut of solid-liquid extraction and solid-gas extraction.

Although the material to be processed is tobacco shreds in the one embodiment, the material to be processed may be natural solid material, such as coffee beans and black tea leaves. In this case, caffeine and the like are extracted. When tobacco is subjected to extraction as material, it is preferable that tobacco shreds processed through dehydration be independently subjected to extraction. However, shreds of undried tobacco laminae or stems, tobacco dust, recycled tobacco or a mixture of these may be extracted together with the dried tobacco shreds.

Although the solvent is $CO_2$ in the one embodiment, either or both of water and alcohol may be contained as cosolvent. As solvent, it is preferable to use $CO_2$ that has relatively low temperature and pressure critical points and is nontoxic and safe. However, $C_3H_8$, $N_2O$, Ar, $SF_6$, $CHF_3$, $CF_4$, $CHClF_2$, $CHCl_2F$, $CClF_3$, $CCl_2F_2$, $CCl_3F$, $CBrF_3$, $CFCl=CF_2$, $CF_2=CH_2$, $CF_3$-$CF_2$-$CF_3$ or the like may be used.

Although the activated carbon is used as absorbent in the one embodiment, a synthetic absorbent, zeolite, ion exchange resin, alumina, and silica gel may be used independently or in combination.

According to the one embodiment, the extraction device is a closed cycle provided with the circulation channel 2, but the device may be an open cycle that constantly supplies new solvent into extraction containers. However, if the device is a closed cycle, among components extracted from the material, a component that is not absorbed by the absorbent, for example, a tobacco aroma component is adsorbed by the material again while circulating through the circulation channel 2. This makes it possible to maintain the concentration of the aroma component contained in tobacco at predetermined partition equilibrium concentration, which prevents degradation of tobacco flavor.

Although the shreds 10 are wrapped in the baskets 14 made of the nonwoven cloth in the extraction device of the one embodiment, the shreds 10 may be filled in metal net baskets through which the solvent can pass. In the extraction device according to the one embodiment, the material zones filled with the material to be processed and the adsorbent zones filled with the adsorbent are formed within the extraction containers 8 so as to be separated by the baskets 14. However, metal net shelves for separating the material zones and the adsorbent zones may be set within the extraction containers 8 instead of the baskets 14.

In the extraction device according to the one embodiment, each of the extraction containers 8 is filled with three material layers. However, the number or thicknesses of the material and adsorbent layers are not particularly limited. The thicknesses of the material layers, however, are determined so that the nicotine and TSNA concentrations in the solvent are not saturated while the solvent passes through each of the layers at the early stage of extraction. At the same time, the thicknesses of the adsorbent layers are determined so that most of the nicotine and TSNA is removed from the solvent that has passed through the material layers at the early stage of extraction while the solvent passes through each of the layers. It is also preferable that the material layers and the adsorbent layers have the same thicknesses, respectively, for the purpose of surely suppressing fluctuations of the reduction rates of nicotine and the TSNA.

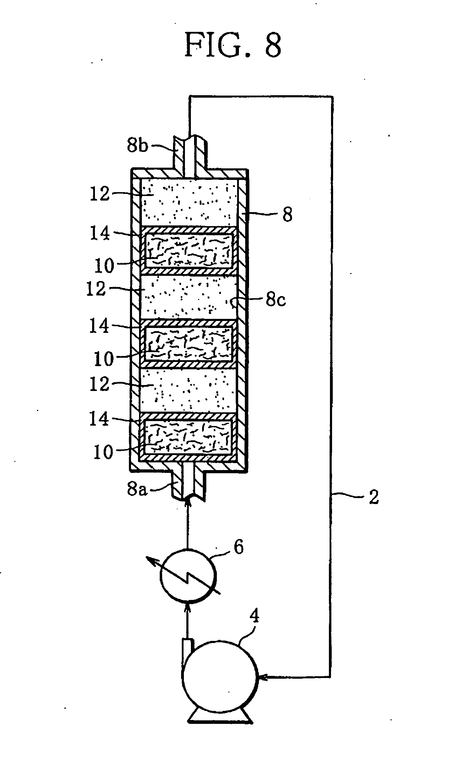

Although the extraction device of the one embodiment has the two extraction containers 8, the number of the extraction containers 8 is not particularly limited. As illustrated in FIG. 8, the number of the extraction containers 8 may be one.

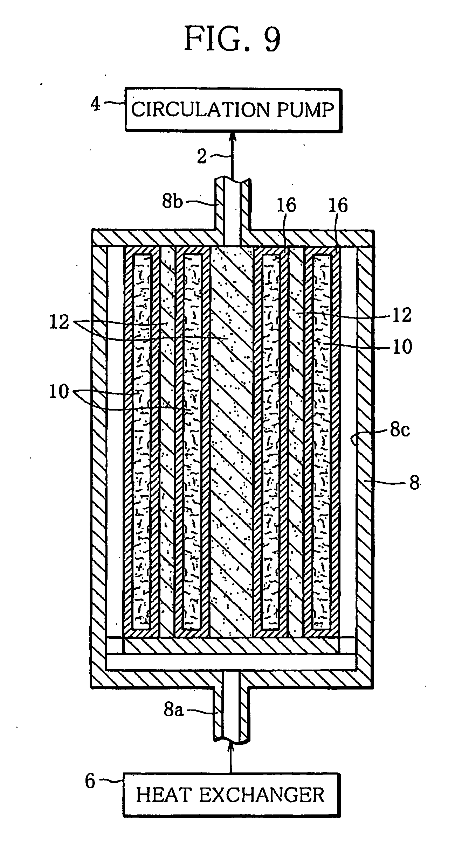

In the extraction device according to the one embodiment, the material to be processed and the adsorbent are alternately arranged in the axial direction. As illustrated in FIG. 9, the material to be processed and the adsorbent may be alternately arranged in a radial direction. In this case, each of the material and adsorbent layers has a shape like a tube. After flowing into the extraction container 8 from the inlet port 8a, the solvent runs in the radial direction from the material layer located in the most outer circumference toward the adsorbent layer located in the most inner circumference. After alternately passing through the material layers and the adsorbent layers, the solvent travels upward to flow out from the outlet port 8b. The adsorbent layer and the material layer may be located in the most outer circumference and the most inner circumference, respectively, and the solvent may be circulated from the most inner circumference to the most outer circumference. In this case, each of the baskets 16 is also formed into a tube corresponding to the shape of each of the material layers.

## Claims

1. A method of extracting a component from material, comprising the steps of:

   alternately arranging the material and adsorbent in layers along an inner channel (8c) of a container (8);
   supplying a high-pressure solvent into the inner channel (8c) of the container (8);
   extracting a predetermined component from the material into the solvent; and
   adsorbing the predetermined component contained in the solvent into the adsorbent to remove the component.

2. The method of extracting a component from material according to claim 1, wherein:

   carbon dioxide having a temperature of 10 °C to 80 °C and a pressure of 3 MPa to 40 MPa is supplied as the high-pressure solvent.

3. The method of extracting a component from material according to claim 2, wherein:

   the material is tobacco.

4. The method of extracting a component from material according to claim 3, wherein:

   nicotine and tobacco-specific nitrosamine are removed each as the predetermined component.

5. The method of extracting a component from material according to claim 4, wherein:

   the adsorbent contains one substance that is selected from the group consisting of activated carbon, a synthetic adsorbent, zeolite, ion exchange resin, alumina, and silica gel.

6. The method of extracting a component from material according to claim 5, further including a preprocessing step of:

   previously finding relationship between a time period for supplying the solvent and a reduction rate of the predetermined component in the material in each of the layers, and determining a solvent supply time period required for a representative reduction rate of the predetermined component of the entire material to reach a desired value, wherein:

      upon elapse of the solvent supply time period that is determined in the preprocessing step, the supply of the solvent is stopped.

7. The method of extracting a component from material according to claim 6, wherein:

   the solvent is circulated.

8. A device for extracting a component from material, comprising:

a container (8) including an inner channel;
material zones filled with the material and adsorbent zones filled with adsorbent, said material zones and said adsorbent zones are alternately arranged in layers in the inner channel (8c) of the container (8);
a circulation channel (2) for solvent, which is partially formed of the inner channel (8c) of the container (8), and
a circulation pump (4) interposed in the circulation channel (2).

**Patentansprüche**

1. Verfahren zum Extrahieren eines Bestandteiles aus einem Material, umfassend die Schritte:

    alternierendes Anordnen des Materials und des Adsorbens in Form von Schichten längs eines inneren Kanals (8c) eines Behälters (8);
    Zuführen eines Lösungsmittels unter hohem Druck in den inneren Kanal (8c) des Behälters (8);
    Extrahieren eines vorherbestimmten Bestandteiles aus dem Material in das Lösungsmittels; und
    Adsorbieren des im Lösungsmittel enthaltenen vorherbestimmten Bestandteiles in das Adsorbens, um den Bestandteil zu entfernen.

2. Verfahren zum Extrahieren eines Bestandteiles aus einem Material nach Anspruch 1, wobei:

    Kohlendioxid mit einer Temperatur von 10°C bis 80°C und einem Druck von 3 MPa bis 40 MPa als Hochdruck-Lösungsmittel zugeführt wird.

3. Verfahren zum Extrahieren eines Bestandteiles aus dem Material nach Anspruch 2, wobei:

    das Material Tabak ist.

4. Verfahren zum Extrahieren eines Bestandteiles aus einem Material nach Anspruch 3, wobei:

    Nikotin und tabakspezifisches Nitrosamin jeweils als vorherbestimmter Bestandteil entfernt werden.

5. Verfahren zum Extrahieren eines Bestandteiles aus einem Material nach Anspruch 4, wobei:

    das Adsorbens eine Substanz enthält, die ausgewählt ist aus der Gruppe, bestehend aus aktiviertem Kohlenstoff, einem synthetischen Adsorbens, Zeolith, einem Ionenaustauschharz, Aluminiumoxid und Silikagel.

6. Verfahren zum Extrahieren eines Bestandteiles aus einem Material nach Anspruch 5, weiterhin enthaltend einen Vorverarbeitungsschritt:

    vorheriges Herausfinden der Beziehung zwischen einem Zeitraum zum Zuführen des Lösungsmittels und einer Reduktionsrate des vorherbestimmten Bestandteiles im Material in jeder der Lagen, und Bestimmen des Zeitraumes für das Zuführen des Lösungsmittels, welcher für eine repräsentative Reduktionsrate des vorherbestimmten Bestandteiles des gesamten Materials erforderlich ist, um einen gewünschten Wert zu erhalten, wobei:

        beim Ablaufen des Zeitraumes für die Zufuhr des Lösungsmittels, welcher im Vorverarbeitungsschritt bestimmt wurde, die Zufuhr des Lösungsmittels gestoppt wird.

7. Verfahren zum Extrahieren eines Bestandteiles aus einem Material nach Anspruch 6, wobei:

    das Lösungsmittel umgewälzt bzw. zirkuliert wird.

8. Vorrichtung zum Extrahieren eines Bestandteiles aus einem Material, umfassend:

    einen Behälter (8) mit einem inneren Kanal;
    mit dem Material gefüllte Materialzonen und mit dem Adsorptionsmittel gefüllte Adsorptionszonen, wobei die Materialzonen und die Adsorbenszonen alternierend in den Schichten im inneren Kanal (8c) des Behälters (8) angeordnet sind;
    einen Zirkulationskanal (2) für das Lösungsmittel, der teilweise aus dem inneren Kanal (8c) des Behälters (8) geformt ist, und eine Zirkulationspumpe (4), die in den Zirkulationskanal (2) eingefügt ist.

**Revendications**

1. Procédé pour extraire un composant à partir d'un matériau, comprenant les étapes consistant à :

   agencer en alternance le matériau et un adsorbant en couches le long d'un canal intérieur (8c) d'un récipient (8) ;
   introduire un solvant sous haute pression dans le canal intérieur (8c) du récipient (8) ;
   extraire un composant prédéterminé à partir du matériau dans le solvant ; et
   adsorber dans l'adsorbant le composant prédéterminé contenu dans le solvant afin de retirer le composant.

2. Procédé pour extraire un composant à partir d'un matériau selon la revendication 1, dans lequel du dioxyde de carbone à une température de 10°C à 80°C et sous une pression de 3 MPa à 40 MPa est introduit à titre du solvant sous haute pression.

3. Procédé pour extraire un composant à partir d'un matériau selon la revendication 2, dans lequel le matériau est le tabac.

4. Procédé pour extraire un composant à partir d'un matériau selon la revendication 3, dans lequel la nicotine et la nitrosamine spécifique du tabac sont retirées chacune à titre du composant prédéterminé.

5. Procédé pour extraire un composant à partir d'un matériau selon la revendication 4, dans lequel l'adsorbant contient une substance qui est choisie dans le groupe constitué par le charbon activé, un adsorbant synthétique, une zéolite, une résine échangeuse d'ions, l'alumine, et le gel de silice.

6. Procédé pour extraire un composant à partir d'un matériau selon la revendication 5, comprenant en outre une étape de prétraitement consistant à :

   trouver au préalable une relation entre la période de temps pour introduire le solvant et le taux de réduction du composant prédéterminé dans le matériau dans chacune des couches, et déterminer la période de temps d'introduction de solvant requise pour un taux de réduction représentatif du composant prédéterminé de tout le matériau afin que soit atteinte une valeur souhaitée, dans lequel :

      une fois que la période de temps d'introduction de solvant déterminée dans l'étape de prétraitement est terminée, la fourniture du solvant est interrompue.

7. Procédé pour extraire un composant à partir d'un matériau selon la revendication 6, dans lequel le solvant est en circulation.

8. Dispositif pour extraire un composant à partir d'un matériau, comprenant :

   un récipient (8) contenant un canal intérieur ;
   des zones de matériau remplies du matériau et des zones adsorbantes remplies d'adsorbant, lesdites zones de matériau et lesdites zones d'adsorbant étant agencées en alternance en couches dans le canal intérieur (8c) du récipient (8) ;
   un canal de circulation (2) pour un solvant, qui est partiellement formé du canal intérieur (8c) du récipient (8), et une pompe de circulation (4) interposée dans le canal de circulation (2).

# FIG. 1

# FIG. 2

# FIG. 3

# FIG. 4

# FIG. 5

# FIG. 6

# FIG. 7

# FIG. 8

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4153063 A
- JP H01196285 B
- JP 2003526345 PCT
- JP 404281801 B